# EUROPÄISCHE PATENTSCHRIFT

(11) **EP 3 221 874 B1**
(45) Veröffentlichungstag und Bekanntmachung des Hinweises auf die Patenterteilung: **06.03.2019**
(21) Anmeldenummer: 15825902.8
(22) Anmeldetag: 18.11.2015
(51) Int. Cl.: H01G 9/052, H01G 9/00, B22F 3/10, H01G 13/00, F27B 7/32, H01G 9/042, B22F 7/00, F27D 3/00

(54) **CHARGIERVORRICHTUNG FÜR THERMISCHE BEHANDLUNG VON TANTALKONDENSATOREN**
CHARGING DEVICE FOR THE THERMAL TREATMENT OF TANTALUM CAPACITORS
DISPOSITIF DE CHARGEMENT POUR LE TRAITEMENT THERMIQUE DE CONDENSATEURS AU TANTALE

(30) Priorität: 21.11.2014 AT 4042014 U
(43) Veröffentlichungstag der Anmeldung: 27.09.2017
(73) Patentinhaber: Plansee SE, 6600 Reutte (AT)
(72) Erfinder: EBERLE, Wolfgang, 6611 Heiterwang (AT); HOSP, Patrick, 6621 Bichlbach (AT); KATHREIN, Martin, Tehuacan, Puebla CP75760 (MX); LANG, Bernhard, 6651 Häselgehr (AT); SPRENGER, Dietmar, 6610 Wängle (AT); TRAXLER, Hannes, 6600 Lechaschau (AT)
(74) Vertreter: Ciesla, Bettina
(86) Internationale Anmeldenummer: PCT/AT2015/000145
(87) Internationale Veröffentlichungsnummer: WO 2016/077853

(56) Entgegenhaltungen:
- EP-A1- 1 095 236
- DE-A1-102011 109 756
- US-A- 3 984 208
- US-A- 5 456 878
- US-A1- 2010 326 239

## Beschreibung

Die Erfindung betrifft eine Chargiervorrichtung, die zumindest einen Bereich aus Ta oder einer Ta-Legierung mit einem Ta-Gehalt > 90 Ma% umfasst, sowie ein Verfahren zu deren Herstellung.

Tantal (Ta) findet beispielsweise Verwendung im Bereich des chemischen Apparatebaus und für Hochtemperaturöfen. Zudem wird Ta in sogenannten Ta-Elektrolytkondensatoren eingesetzt. Ein Ta-Elektrolytkondensator weist einen Elektrodenkörper aus Ta auf, der durch anodische Oxidation gleichmäßig mit einer dielektrischen Schicht aus Tantalpentoxid bedeckt ist. Zur Herstellung des Elektrodenkörpers wird Ta-Pulver mit einem Bindemittel versetzt und anschließend um einen Ta-Draht zu einem runden oder quaderförmigen Block gepresst. Dieser Block wird bei hohen Temperaturen gesintert. Durch die Sinterung werden die Pulverpartikel elektrisch leitend verbunden. Die Sinterung erfolgt typischerweise bei Temperaturen zwischen 1.300°C und 2.000°C in Chargiervorrichtungen wie zum Beispiel Behältern oder Platten aus Ta. Weist der Behälter eine geringe Wandhöhe auf, wird er als Tasse (zum Beispiel Chargiertasse oder Sintertasse) bezeichnet. Die Chargiervorrichtung ist aus Ta gefertigt, um Querkontaminationen zu vermeiden. Unter Querkontamination wird im Besonderen die Eindiffusion von Bestandteilen der Chargiervorrichtung in das Glühgut (zum Beispiel in den Ta-Kondensator) verstanden.

Das Sintern von Ta-Kondensatoren ist beispielsweise in der CN 103700504 A oder der JP 2013135211 A beschrieben. Nachteilig bei Chargiervorrichtungen aus Ta ist die niedrige Hochtemperatur- bzw. Kriechfestigkeit, die zu einer nicht ausreichenden Formbeständigkeit insbesondere bei langen Einsatzzeiten oder hoher zyklischer Beanspruchung führt. Auch unter Verwendung von mikrolegiertem Ta (zum Beispiel mit Yttrium (Y) oder Silizium (Si)) wird die Hochtemperaturformbeständigkeit nicht verbessert. Konventionell hergestellte (zum Beispiel durch Schmelzen oder Hochtemperatursintern) hochlegierte Ta-Legierungen, wie beispielsweise Ta-10 Ma% W, können nicht eingesetzt werden, da dies zur Verunreinigung des Ta-Kondensators mit dem im Ta gelösten Legierungselement führen würde.

Ziel der gegenständlichen Erfindung ist es daher, eine Chargiervorrichtung zur Verfügung zu stellen, die sowohl eine hohe Festigkeit, insbesondere eine hohe Warm- und Kriechfestigkeit, aufweist und die weiterhin den Ta-Kondensator nicht verunreinigt.

Eine weitere Aufgabe der Erfindung ist die Bereitstellung eines Verfahrens zur Herstellung einer Chargiervorrichtung mit den zuvor genannten Eigenschaften.

Die Aufgabenstellung wird durch die unabhängigen Ansprüche gelöst. Vorteilhafte Ausgestaltungen sind in den Unteransprüchen angeführt.

Die Chargiervorrichtung umfasst dabei zumindest einen Bereich A aus Ta oder einer Ta-Legierung mit einem Ta-Gehalt > 90 Ma%, bevorzugt > 95 Ma% und zumindest einen Bereich B aus Molybdän (Mo), einer Mo-Legierung mit Mo > 90 Ma%, bevorzugt > 95 Ma%, Wolfram (W), einer W-Legierung mit W > 90 Ma%, bevorzugt > 95 Ma% oder einer Mo-W-Legierung mit einem Summengehalt Mo + W > 90 Ma%, bevorzugt > 95 Ma%.
In vorteilhafter Weise besteht die Chargiervorrichtung aus zumindest einem Bereich A und zumindest einem Bereich B.

Mit der erfindungsgemäßen Ausführung der Chargiervorrichtung ist es möglich, die ansonsten gegenläufigen Eigenschaften hohe Formbeständigkeit bei gleichzeitiger Vermeidung von Querkontamination in einer Komponente zu verbinden.

Der Bereich B ist wie erwähnt aus Mo, einer Mo-Legierung mit Mo > 90 Ma%, W, einer W-Legierung mit W > 90 Ma% oder einer Mo-W-Legierung mit einem Summengehalt Mo + W > 90 Ma% gefertigt.
Diese Werkstoffe weisen im Vergleich zu Rein-Ta und Ta-Legierungen eine deutlich höhere Warm- und Kriechfestigkeit auf, wodurch die Chargiervorrichtung eine ausgezeichnete Formbeständigkeit auch bei hohen Einsatztemperaturen aufweist. Vorteilhafte Mo-Legierungen sind beispielsweise Mo - 0,1 bis 2 Ma% Seltenerdoxid. Ein besonders vorteilhaftes Seltenerdoxid ist La₂O₃. Nach einer Glühbehandlung bzw. während des Einsatzes bilden diese Legierungen ein grobkörniges, gerichtetes Stapelkristallgefüge aus, das speziell bei Temperaturen > 1.300°C eine ausgezeichnete Kriechfestigkeit gewährleistet. Weitere vorteilhafte Mo-Legierungen sind TZM und MHC. TZM ist mit Titan (Ti), Zirkon (Zr) und Kohlenstoff (C) legiert. Typische Ti-Werte liegen bei ca. 0,3 bis 0,7 Ma%, typische Zr-Werte bei 0,05 bis 0,1 Ma% und typische C-Werte bei 0,01 bis 0,04 Ma%. MHC ist mit Hafnium (Hf) und C legiert, wobei typische Hf-Werte bei 1 bis 1,4 Ma% und typische C-Werte bei 0,05 bis 0,15 Ma% liegen. Beispiele für vorteilhafte Wolfram-Legierungen sind AKS Wolfram, das typischerweise 0,004 bis 0,01 Ma% Kalium (K) enthält, W-La₂O₃ mit typischerweise 1 bis 2 Ma% La₂O₃ und W-Ce₂O₃ mit typischerweise 1 bis 2 Ma% Ce₂O₃. Auch Mo-W-Legierungen können vorteilhaft eingesetzt werden, wobei hier der Mo- bzw. W-Gehalt vorteilhaft zwischen 5 und 95 % gewählt werden kann.

Der Bereich A ist aus Rein-Ta oder einer Ta-Legierung mit einem Ta-Gehalt > 90 Ma%, bevorzugt > 95 Ma%, gefertigt. Unter Rein-Ta ist im Zusammenhang mit dieser Erfindung Ta mit einer technischen Reinheit zu verstehen, wobei der typische Ta-Gehalt bei ca. 99,5 bis 99,995 Ma% liegt. Ta-Legierungen können vorteilhaft 0,001 bis 10 Ma% einer oder mehrerer Komponenten ausgewählt aus der Gruppe Oxide, Karbide, Nitride, W, Mo und Niob (Nb) enthalten. W, Mo und Nb liegen dabei vorteilhaft nicht in gelöster Form, sondern als diskrete Körner vor, was die Ausdiffusion vermindert.

Vorteilhaft sind der Bereich A und der Bereich B formschlüssig und/oder stoffschlüssig verbunden. Formschlüssige Verbindungen zeichnen sich darin aus, dass die Verbindungspartner auch ohne oder bei unterbrochener Kraftübertragung nicht lösbar sind. Auch stoffschlüssige Verbindungen sind nicht lösbar, wobei die zu verbindenden Teile durch atomare und/oder molekulare Kräfte zusammengehalten werden.

In besonders vorteilhafter Weise wird der Bereich A auf dem Bereich B in Form einer Schicht aufgebracht. Ein so hergestellter Verbundwerkstoff wird üblicherweise als Schichtverbund bezeichnet. Der Bereich A ist dabei mit dem Bereich B formschlüssig (zum Beispiel durch einen mechanischen Verzahnungseffekt) und/oder stoffschlüssig (zum Beispiel durch Interdiffusion) verbunden. In einer weiteren sehr vorteilhaften Ausführung weist der Schichtverbund drei Lagen auf, die form- und/oder stoffschlüssig miteinander verbunden sind. Die außenseitig angeordneten Lagen bestehen aus dem Bereich A und die Zentrumslage aus dem Bereich B.

In einfacher Weise kann der Bereich A durch einen thermischen Spritzprozess auf dem Bereich B aufgebracht werden. Zu den thermischen Spritzverfahren zählen das Schmelzbadspritzen, Lichtbogenspritzen, Plasmaspritzen, Flammspritzen, Hochgeschwindigkeitsflammspritzen, Detonationspritzen, Laserspritzen, PTWA-Spritzen und das Kaltgasspritzen (cold gas spraying - abgekürzt CGS). Als besonders vorteilhaft ist dabei das CGS hervorzuheben, da hier der Spritzstoff nicht aufgeschmolzen wird und damit sehr reine, sauerstoffarme Schichten hergestellt werden können. Aus der Mikrostruktur der abgeschiedenen Schicht kann ein Fachmann zweifelsfrei schließen, ob die Schicht durch ein thermisches Spritzverfahren hergestellt worden ist, wie dies in Lehrbüchern zum thermischen Spritzen im Detail erläutert ist. Der Fachmann kann auch eine CGS Schicht von einer, durch ein anderes thermisches Spritzverfahren hergestellten Schicht unterscheiden, da beim CGS der Beschichtungsstoff nicht aufgeschmolzen wird und keine prozessbedingte Oxidation stattfindet. Die Körner der Schicht sind zumindest bereichsweise kaltverformt und zeichnen sich durch eine vergleichsweise (Vergleich zu anderen thermischen Spritzverfahren) hohe Härte aus.

Beim CGS werden Pulverpartikel mit sehr hoher kinetischer und geringer thermischer Energie auf ein Trägermaterial aufgebracht. Ein unter hohem Druck stehendes Prozessgas, beispielsweise Stickstoff (N₂), Luft, Helium (He) oder Mischungen daraus, wird mittels einer Konvergent-Divergent-Düse (auch als Überschalldüse) bezeichnet, entspannt. Eine typische Düsenform stellt dabei die Laval-Düse (auch De-Laval-Düse genannt) dar. Je nach verwendetem Prozessgas sind Gasgeschwindigkeiten von beispielsweise 900 m/s bei N₂ bis 2.500 m/s bei He erreichbar. Der Beschichtungsstoff (Rein-Ta oder eine Ta-Legierung mit einem Ta-Gehalt > 90 Ma%) wird dabei beispielsweise vor dem engsten Querschnitt der Konvergent-Divergent-Düse, die einen Teil der Spritzpistole bildet, in den Gasstrom injiziert, typischerweise auf eine Geschwindigkeit von 300 bis 1.200 m/s beschleunigt und auf dem Bereich B (zum Beispiel ein aus Blech gefertigter Formteil) abgeschieden. Durch Aufheizen des Gases vor der Konvergent-Divergent-Düse kann die Strömungsgeschwindigkeit des Gases und somit auch die Partikelgeschwindigkeit erhöht werden. Mit CGS lassen sich Ta bzw. Ta-Legierungen mit einem Ta-Gehalt > 90 Ma% zu dichten, gut haftenden Schichten verspritzen. Der Schichtaufbau erfolgt dabei lagenweise aus den einzelnen Ta- bzw. Ta-Legierungspartikeln.

Der so hergestellte Verbundwerkstoff weist nun Bereiche mit unterschiedlichen funktionalen Eigenschaften auf. Der Bereich B gewährleistet eine hohe Warm- und Kriechfestigkeit bei im Vergleich zu Ta geringerem Materialpreis. Die Beschichtung (Bereich A) aus Ta oder der Ta-Legierung wird in vorteilhafter Weise dort aufgebracht, wo im Einsatz der Kontakt mit dem Glüh- bzw. Sintergut, zum Beispiel den Ta-Kondensatoren, besteht. Damit kann in zuverlässiger Weise vermieden werden, dass die Ta-Kondensatoren durch Elemente der Chargiervorrichtung verunreinigt werden.

Die erfindungsgemäße Chargiervorrichtung bleibt auch bei hohen Einsatztemperaturen und hoher Zyklenzahl formstabil. In überraschender Weise ist auch die Interdiffusion von Elementen aus dem Bereich B in den Bereich A, bzw. von Elementen aus dem Bereich A in den Bereich B bei den gegebenen Einsatztemperaturen / -zeiten nur sehr gering, so dass auch bei langen Einsatzzeiten und hohen Temperaturen kaum Diffusionsporen (sogenannte Kirkendall-Poren) ausgebildet werden, die die Stabilität der Chargiervorrichtung beeinträchtigen würden.

Im Weiteren ist die Auftragseffizienz von Ta durch CGS sehr hoch, wodurch bei der Beschichtung kaum Materialverluste entstehen. Vorteilhaft weist die Beschichtung aus Ta- bzw. der Ta-Legierung eine Schichtdicke von 50 bis 400 µm, bevorzugt von 100 bis 300 µm und insbesondere bevorzugt von 120 bis 200 µm auf. Durch CGS kann die Ta-Schichtdicke genau und prozesssicher eingestellt werden. So ist es möglich, die höher beanspruchten Bereiche der Chargiervorrichtung mit einer dickeren Ta-Schicht zu versehen.

Gemäß einer bevorzugten Ausgestaltung ist die Chargiervorrichtung als Behälter oder Platte ausgeführt. Bevorzugt weist dabei der Behälter innenseitig zumindest teilweise den Bereich A auf. Da nur die Innenseite des Behälters mit dem Glühgut (beispielsweise Ta-Kondensatoren) in Kontakt kommt, kann eine Verunreinigung des Glühguts zuverlässig vermieden werden. Die Außenseite des Behälters kann vorteilhaft aus dem Bereich B gebildet sein, da dieser Bereich nicht mit dem Glühgut in Kontakt steht. Der Bereich B gewährleistet eine hohe Formstabilität des Behälters. In einer weiteren bevorzugten Ausführungsform weist der Behälter zumindest bereichsweise außen- und innenseitig den Bereich A auf. Zwischen den A Bereichen ist zumindest bereichsweise der Bereich B angeordnet. Diese Ausführungsform gewährleistet, dass auch bei Kontakt des Glühguts mit der Behälteraußenseite eine Kontamination zuverlässig vermieden werden kann. Die Zentrumslage aus dem Bereich B gewährleistet wiederum die hohe Formstabilität des Behälters.

Insbesondere bevorzugt ist der Behälter als Tasse ausgebildet. Unter Tasse wird dabei ein Behälter verstanden, bei dem der zylindrische Seitenbereich mit geringer Höhe ausgeführt ist. Wiederum bevorzugt weist der Behälter oder die Tasse im Zentrumsbereich eine Hülse auf, die als Chargierstützvorrichtung dient.

Besonders vorteilhaft kann die erfindungsgemäße Chargiervorrichtung in einem Hochtemperaturofen eingesetzt werden. Unter Hochtemperaturofen wird dabei ein Ofen verstanden, der bei Temperaturen > 1.000°C betrieben wird.

Die erfinderische Aufgabe wird auch durch ein Verfahren zur Herstellung einer Chargiervorrichtung erfüllt.

Das Verfahren umfasst dabei zumindest die folgenden Schritte:
- Bereitstellen eines Grundkörpers, der zumindest einen Bereich B aus Mo, einer Mo-Legierung mit Mo > 90 Ma%, bevorzugt > 95 Ma%, W, einer W-Legierung mit W > 90 Ma%, bevorzugt > 95 Ma% oder einer Mo-W-Legierung mit einem Summengehalt Mo + W > 90 Ma%, bevorzugt > 95 Ma% umfasst,
   und
- Aufbringen einer Schicht (Bereich A) aus Ta oder einer Ta-Legierung mit einem Ta-Gehalt > 90 Ma%, bevorzugt > 95 Ma% auf dem Bereich B durch thermisches Spritzen, so dass der Grundkörper zumindest teilweise mit der Schicht versehen ist.

Bevorzugt wird das Verfahren zur Herstellung einer Chargiervorrichtung mit zumindest einer der folgenden Eigenschaften eingesetzt:
- Der Bereich A und der Bereich B sind formschlüssig und/oder stoffschlüssig verbunden.
- Bereich A und Bereich B bilden einen Schichtverbund.
- Der Schichtverbund weist die Lagenabfolge Bereich A / Bereich B / Bereich A auf.
- Die Chargiervorrichtung ist ein Behälter oder eine Platte.
- Der Behälter besteht innenseitig zumindest teilweise aus dem Bereich A.
- Der Behälter besteht außenseitig zumindest teilweise aus dem Bereich B und innenseitig zumindest teilweise aus dem Bereich A.
- Der Behälter besteht außenseitig zumindest teilweise aus dem Bereich B und innenseitig zumindest teilweise aus dem Bereich A.
- Der Behälter besteht außenseitig und innenseitig zumindest teilweise aus dem Bereich A. Zwischen den Lagen aus dem Bereich A ist eine Lage aus dem Bereich B angeordnet.
- Der Behälter ist als Tasse ausgebildet.
- Der Bereich B besteht aus Mo, Mo - 0,1 bis 2 Ma% La₂O₃, TZM oder MHC.
- Der Bereich A besteht aus Rein-Ta.
- Der Bereich A liegt als gespritzte Schicht und der Bereich B als verformtes Blech oder Platte vor.

Ein besonders vorteilhaftes thermisches Spritzverfahren stellt dabei das CGS dar. In bevorzugter Weise wird dabei ein Prozessgas mit einem Druck > 5 bar, vorzugsweise > 10 bar, insbesondere bevorzugt > 20 bar (beispielsweise 20 bis 60 bar) in einer Konvergent-Divergent-Düse beschleunigt, ein Pulver (=Beschichtungsstoff) aus Ta oder einer Ta-Legierung mit einem Ta-Gehalt > 90 Ma% vor der, in die oder nach der Konvergent-Düse in das Prozessgas injiziert, dabei beschleunigt und auf dem Grundkörper abgeschieden. Der obere, beispielhaft angeführte Wert von 60 bar ergibt sich aus den derzeit verfügbaren Anlagen. Sollten zukünftig Anlagen verfügbar sein, die einen höheren Gasdruck ermöglichen, kann sich die Grenze entsprechend zu höherem Druck hin verschieben. Der Beschichtungsstoff wird dabei typischerweise auf eine Geschwindigkeit von 300 bis 800 m/s beschleunigt. In vorteilhafter Weise wird das Prozessgas vor der Konvergent-Divergent-Düse aufgeheizt, wodurch bei der Expansion des Gases in der Düse die Strömungsgeschwindigkeit des Gases und somit auch die Partikelgeschwindigkeit erhöht werden kann.

Mit dem erfindungsgemäßen Verfahren lassen sich aufgrund der niedrigen Prozesstemperaturen bevorzugt auch Ta-Legierungen herstellen, die 0,001 bis 10 Ma% einer oder mehrerer Komponenten ausgewählt aus der Gruppe Oxide, Karbide, Nitride, W, Mo und Niob (Nb) enthalten. W, Mo und Nb liegen nach dem Spritzvorgang als diskrete Körner in der Ta-Matrix vor. Die harten keramischen bzw. metallischen (zum Beispiel W und Mo) Bestandteile wirken sich günstig auf die Schichtdichte aus, da beim Auftreffen der harten Partikel die bereits abgeschiedenen Schichtbestandteile weiter verdichtet werden.

Durch Einlagerung dieser Komponenten kann auch die Warm- bzw. Kriechfestigkeit der Ta-Schicht erhöht werden. Vorteilhaft ist, wenn die keramischen Bestandteile einen Schmelzpunkt > 1300°C, insbesondere bevorzugt > 1800°C aufweisen.

Der Spritzabstand beträgt beim CGS bevorzugt 20 bis 60 mm, insbesondere bevorzugt 30 bis 50 mm. Die gewünschte Schichtdicke wird durch eine entsprechende Auswahl der Anzahl an Spritzdurchgängen eingestellt. Im Weiteren besteht der Bereich B vorteilhaft aus einem verformten Material, da dadurch eine hohe Warm- und Kriechfestigkeit erzielt werden kann. Als besonders vorteilhafter Verformungsprozess ist das Walzen zu erwähnen. Das verformte Material ist daher vorteilhaft eine gewalzte Platte oder ein gewalztes Blech. Die Platte oder das Blech wird vorteilhaft durch ein bildsames Verfahren zu einem Formteil (zum Beispiel Behälter oder Tasse) weiterverarbeitet.

Nachfolgend wird die Erfindung an Hand eines Beispiels näher erläutert.

Gemäß einer bevorzugten Ausgestaltung ist die Chargiervorrichtung als Tasse ausgebildet, die für eine thermische Behandlung von in der Tasse chargierten Bauteilen (zum Beispiel Ta-Kondensatoren) verwendet wird. Die Tasse ist einteilig ausgeführt und weist einen Tassenboden und einen Tassenrand auf. Eine Mo-Hülse ist zentral mit dem Tassenboden verbunden. In einer beispielhaften Ausgestaltung weist die Tasse einen Außendurchmesser von 178 mm und eine Randhöhe von 17 mm auf. Als Werkstoff für den Grundkörper der Tasse wird eine verformte (blechförmiges Ausgangsmaterial) Mo-0,7 Ma% La₂O₃ Legierung im rekristallisierten Zustand verwendet, die durch ein übliches bildsames Formgebungsverfahren zur Tasse weiterverarbeitet wird. Tasseninnenseite und Hülsenaußenseite werden durch CGS mit Rein-Ta beschichtet und anschließend miteinander verbunden. Als Beschichtungsstoff wird Ta-Pulver mit einem mittleren laseroptisch gemessenen Partikeldurchmesser d₅₀ von 26,4 µm verwendet.

Folgende Beschichtungsparameter kommen zur Anwendung:
- Prozessgasdruck: 30 bar
- Prozessgasmenge: 65 m³/h
- Förderrate Ta-Pulver: 46 g/min
- Prozessgastemperatur: 800°C
- Abstand Beschichtungspistole - Grundkörper: 40 mm

Die Untersuchung der Schicht ergibt folgende Werte:
- Dichte: 99,5 %
- O-Gehalt: 478 µg/g
- Wasserstoff (H)-Gehalt: 26 µg/g
- N-Gehalt: 94 µg/g

Nach dem Beschichten von Hülsenaußenseite und Tasseninnenseite wird die Hülse mit dem Tassengrundkörper verbunden. Dazu wird die Hülse in eine zentrale Öffnung im Tassenboden eingesteckt und durch eine Körnung verbunden. Durch das Körnen werden Hülse und Tassenboden verformt, so dass eine nietartige Verbindung hergestellt wird. Die erfindungsgemäße Tasse wird in einem Sinterofen für Ta-Kondensatoren eingesetzt. Bei der zur Anwendung kommenden Sintertemperatur von 1.450°C kann keine Verunreinigung der Ta-Kondensatoren durch den Werkstoff des Grundkörpers analytisch festgestellt werden. Auch nach mehrmaligem Zyklieren weist die erfindungsgemäße Chargiervorrichtung keine Verformung auf.

## Patentansprüche

1. Chargiervorrichtung, die zumindest einen Bereich A aus Ta oder einer Ta-Legierung mit einem Ta- Gehalt > 90 Ma% umfasst,
**dadurch gekennzeichnet,**
**dass** die Chargiervorrichtung zumindest einen Bereich B aus Mo, einer Mo-Legierung mit Mo > 90 Ma%, W, einer W-Legierung mit W > 90 Ma% oder einer Mo-W Legierung mit einem Summengehalt Mo + W > 90 Ma% umfasst.

2. Chargiervorrichtung nach Anspruch 1, **dadurch gekennzeichnet, dass** der Bereich A und der Bereich B unter Anwendung zumindest einer Verbindungstechnik ausgewählt aus der Gruppe formschlüssig und stoffschlüssig miteinander verbunden sind.

3. Chargiervorrichtung nach Anspruch 1 oder 2, **dadurch gekennzeichnet, dass** diese einen Schichtverbund, der aus dem Bereich A und dem Bereich B gebildet ist, umfasst.

4. Chargiervorrichtung nach einem der vorangehenden Ansprüche, **dadurch gekennzeichnet, dass** diese einen Schichtverbund mit der Lagenabfolge Bereich A / Bereich B / Bereich A umfasst.

5. Chargiervorrichtung nach einem der vorangehenden Ansprüche, **dadurch gekennzeichnet, dass** der Bereich A auf dem Bereich B durch einen thermischen Spritzprozess aufgebracht ist.

6. Chargiervorrichtung nach 5, **dadurch gekennzeichnet, dass** der thermische Spritzprozess Kaltgasspritzen ist.

7. Chargiervorrichtung nach einem der vorangehenden Ansprüche, **dadurch gekennzeichnet, dass** die Chargiervorrichtung ein Behälter oder eine Platte ist.

8. Chargiervorrichtung nach Anspruch 7, **dadurch gekennzeichnet, dass** der Behälter innenseitig zumindest teilweise aus dem Bereich A besteht.

9. Chargiervorrichtung nach Anspruch 7 oder 8, **dadurch gekennzeichnet, dass** der Behälter außenseitig zumindest teilweise aus dem Bereich B besteht.

10. Chargiervorrichtung nach einem der Ansprüche 7 bis 9, **dadurch gekennzeichnet, dass** der Behälter als Tasse ausgebildet ist.

11. Chargiervorrichtung nach einem der vorangehenden Ansprüche, **dadurch gekennzeichnet, dass** der Bereich B aus Mo, Mo - 0,1 bis 2 Ma%La₂O₃, TZM oder MHC besteht.

12. Chargiervorrichtung nach einem der vorangehenden Ansprüche, **dadurch gekennzeichnet, dass** der Bereich A aus Rein-Ta besteht.

13. Verwendung einer Chargiervorrichtung nach einem der vorangehenden Ansprüche zum Einsatz in einem Hochtemperaturofen.

14. Verfahren zur Herstellung einer Chargiervorrichtung, das zumindest die folgenden Schritte umfasst:
- Bereitstellen eines Grundkörpers, der zumindest einen Bereich B aus Mo, einer Mo-Legierung mit Mo > 90 Ma%, W, einer W-Legierung mit W > 90 Ma% oder einer Mo-W Legierung mit einem Summengehalt Mo + W > 90 Ma% umfasst,
und
- Aufbringen einer Schicht (Bereich A) aus Ta oder einer Ta-Legierung mit einem Ta- Gehalt > 90 Ma% auf dem Bereich B durch thermisches Spritzen, so dass der Bereich B zumindest teilweise mit der Schicht versehen ist.

15. Verfahren nach Anspruch 14 zur Herstellung eines Chargiervorrichtung nach einem der Ansprüche 1 bis 13.

16. Verfahren nach Anspruch 14 oder 15, **dadurch gekennzeichnet, dass** die Schicht durch Kaltgasspritzen aufgebracht wird.

17. Verfahren nach Anspruch 16, **dadurch gekennzeichnet, dass** ein Prozessgas mit einem Druck > 5 bar in einer Konvergent-Divergent Düse beschleunigt wird, ein Pulver aus Ta oder einer Ta-Legierung mit einem Ta- Gehalt > 90 Ma% vor der, in die oder nach der Konvergent-Divergent Düse in das Prozessgas injiziert, dabei beschleunigt und zumindest bereichsweise auf dem Bereich B abgeschieden wird und dort den Bereich A bildet.

18. Verfahren nach einem der Ansprüche 14 bis 17, **dadurch gekennzeichnet, dass** der Bereich B aus verformtem Material hergestellt wird.

## Claims

1. A charging device comprising at least one region A composed of Ta or a Ta alloy having a Ta content of > 90% by mass, **characterized in that** the charging device comprises at least one region B composed of Mo, an Mo alloy having an Mo content of > 90% by mass, W, a W alloy having a W content of > 90% by mass or an Mo-W alloy having a total content of Mo + W of > 90% by mass.

2. The charging device as claimed in claim 1, **characterized in that** the region A and the region B are joined to one another using at least one joining technique selected from the group consisting of interlocking and metallurgical bonding.

3. The charging device as claimed in claim 1 or 2, **characterized in that** it comprises a layer composite formed by the region A and the region B.

4. The charging device as claimed in any of the preceding claims, **characterized in that** it comprises a layer composite having the layer sequence region A/region B/region A.

5. The charging device as claimed in any of the preceding claims, **characterized in that** the region A has been applied to the region B by a thermal spraying process.

6. The charging device as claimed in claim 5, **characterized in that** the thermal spraying process is cold gas spraying.

7. The charging device as claimed in any of the preceding claims, **characterized in that** the charging device is a container or a plate.

8. The charging device as claimed in claim 7, **characterized in that** the container consists at least partly of the region A on the inside.

9. The charging device as claimed in claim 7 or 8, **characterized in that** the container consists at least partly of the region B on the outside.

10. The charging device as claimed in any of claims 7 to 9, **characterized in that** the container is configured as a cup.

11. The charging device as claimed in any of the preceding claims, **characterized in that** the region B consists of Mo, Mo - 0.1 to 2% by mass of La₂O₃, TZM or MHC.

12. The charging device as claimed in any of the preceding claims, **characterized in that** the region A consists of pure Ta.

13. The use of a charging device as claimed in any of the preceding claims for use in a high-temperature furnace.

14. A process for producing a charging device, which comprises at least the following steps:
- provision of a main element which comprises at least one region B composed of Mo, an Mo alloy having an Mo content of > 90% by mass, W, a W alloy having a W content of > 90% by mass, or an Mo-W alloy having a total content of Mo + W of > 90% by mass,
and
- application of a layer (region A) composed of Ta or a Ta alloy having a Ta content of > 90% by mass, to the region B by thermal spraying so that the region B is at least partly provided with the layer.

15. The process as claimed in claim 14 for producing a charging device as claimed in any of claims 1 to 13.

16. The process as claimed in claim 14 or 15, **characterized in that** the layer is applied by cold gas spraying.

17. The process as claimed in claim 16, **characterized in that** a process gas having a pressure of > 5 bar is accelerated in a convergent-divergent nozzle, a powder composed of Ta or a Ta alloy having a Ta content of > 90% by mass is injected into the process gas upstream of the, into the or downstream of the convergent-divergent nozzle, is accelerated and is deposited on the region B at least in regions and there forms the region A.

18. The process as claimed in any of claims 14 to 17, **characterized in that** the region B is produced from deformed material.

## Revendications

1. Dispositif de chargement, qui comprend au moins une zone A en Ta ou en un alliage de Ta ayant une teneur en Ta > 90 % en masse,
**caractérisé en ce que**
le dispositif de chargement comprend au moins une zone B en Mo, en un alliage de Mo avec Mo > 90 % en masse, en W, en un alliage de W avec W > 90 % en masse ou en un alliage Mo-W avec une teneur totale Mo + W > 90 % en masse.

2. Dispositif de chargement selon la revendication 1, **caractérisé en ce que** la zone A et la zone B sont reliées l'une avec l'autre par accouplement de forme et accouplement de matière en utilisant au moins une technique de liaison.

3. Dispositif de chargement selon la revendication 1 ou 2, **caractérisé en ce que** celui-ci comprend un composite de couches, qui est formé par la zone A et la zone B.

4. Dispositif de chargement selon l'une quelconque des revendications précédentes, **caractérisé en ce que** celui-ci comprend un composite de couches présentant la succession de couches zone A/zone B/zone A.

5. Dispositif de chargement selon l'une quelconque des revendications précédentes, **caractérisé en ce que** la zone A est appliquée sur la zone B par un procédé d'injection thermique.

6. Dispositif de chargement selon la revendication 5, **caractérisé en ce que** le procédé d'injection thermique est une projection à gaz froid.

7. Dispositif de chargement selon l'une quelconque des revendications précédentes, **caractérisé en ce que** le dispositif de chargement est un contenant ou une plaque.

8. Dispositif de chargement selon la revendication 7, **caractérisé en ce que** le contenant est au moins partiellement constitué par la zone A sur le côté intérieur.

9. Dispositif de chargement selon la revendication 7 ou 8, **caractérisé en ce que** le contenant est au moins partiellement constitué par la zone B sur le côté extérieur.

10. Dispositif de chargement selon l'une quelconque des revendications 7 à 9, **caractérisé en ce que** le contenant est configuré sous la forme d'une tasse.

11. Dispositif de chargement selon l'une quelconque des revendications précédentes, **caractérisé en ce que** la zone B est constituée par Mo, Mo - 0,1 à 2 % en masse de La₂O₃, TZM ou MHC.

12. Dispositif de chargement selon l'une quelconque des revendications précédentes, **caractérisé en ce que** la zone A est constituée par du Ta pur.

13. Utilisation d'un dispositif de chargement selon l'une quelconque des revendications précédentes pour une application dans un four à température élevée.

14. Procédé de fabrication d'un dispositif de chargement, qui comprend au moins les étapes suivantes :
- la préparation d'un corps de base, qui comprend au moins une zone B en Mo, en un alliage de Mo avec Mo > 90 % en masse, en W, en un alliage de W avec W > 90 % en masse ou en un alliage Mo-W avec une teneur totale Mo + W > 90 % en masse,
et
- l'application d'une couche (zone A) en Ta ou en un alliage de Ta ayant une teneur en Ta > 90 % en masse sur la zone B par injection thermique, de telle sorte que la zone B soit au moins partiellement munie de la couche.

15. Procédé selon la revendication 14, pour la fabrication d'un dispositif de chargement selon l'une quelconque des revendications 1 à 13.

16. Procédé selon la revendication 14 ou 15, **caractérisé en ce que** la couche est appliquée par projection à gaz froid.

17. Procédé selon la revendication 16, **caractérisé en ce qu'**un gaz de procédé ayant une pression > 5 bar est accéléré dans une buse convergente-divergente, une poudre en Ta ou en un alliage de Ta ayant une teneur en Ta > 90 % en masse est injectée dans le gaz de procédé avant, dans ou après la buse convergente-divergente, accélérée et déposée au moins en zones sur la zone B, et y forme la zone A.

18. Procédé selon l'une quelconque des revendications 14 à 17, **caractérisé en ce que** la zone B est fabriquée à partir d'un matériau déformé.
